# FASCICULE DE BREVET EUROPEEN

(11) **EP 2 923 542 B1**
(45) Date de publication et mention de la délivrance du brevet: **05.05.2021**
(21) Numéro de dépôt: 15305434.1
(22) Date de dépôt: 25.03.2015
(51) Int. Cl.: A01C 5/06

(54) **Semoir avec une console portant deux outils**
Sämaschine, die eine Konsole mit zwei Werkzeugen umfasst
Seed drill with a console having two working tools

(30) Priorité: 26.03.2014 FR 1452577
(43) Date de publication de la demande: 30.09.2015
(73) Titulaire: Kuhn SAS, 67700 Saverne (FR)
(72) Inventeur: Potier, Philippe, 67290 Zittersheim (FR); Viriat, Laurent, 67440 Westhouse-Marmoutier (FR)
(74) Mandataire: Cabinet Nuss

(56) Documents cités:
- EP-A1- 1 285 564
- EP-A1- 1 529 431
- EP-A1- 1 813 139
- EP-A2- 1 234 489
- WO-A1-2012/093958
- WO-A2-03/037064
- WO-A2-2007/050185
- US-A1- 2010 096 149

## Description

La présente invention se rapporte au domaine technique général du machinisme agricole. L'invention concerne un semoir comportant un châssis et des outils rotatifs répartis régulièrement et arrangés suivant deux rangées sur une poutre respective fixée au châssis. L'invention concerne également un semoir, notamment du type semoir direct, comportant des disques ouvreurs et des disques d'implantation, chaque disque d'implantation étant disposé dans le prolongement d'un disque ouvreur correspondant.

Un semoir de ce type est connu par le document FR 2 722 362 A1. Ce semoir est spécialement conçu pour effectuer du semis direct, c'est-à-dire de semer sans aucun travail du sol préalable. Seule la ligne de semis est préparée pour donner un environnement favorable au développement de la future plante. Le semoir comporte entre autres des outils rotatifs tels que des disques ouvreurs suivis par des disques d'implantation. Le châssis comprend une poutre avant sur laquelle sont fixés les disques ouvreurs et une poutre arrière sur laquelle sont fixés les disques d'implantation. Chaque disque ouvreur est fixé à la poutre avant au moyen d'une console respective. Le disque ouvreur est, quant à lui, lié à la console via un bras. Les consoles portant les disques ouvreurs sont identiques entre elles et une console sur deux est fixée à la poutre avant dans un sens opposé au sens du travail de sorte qu'un disque ouvreur sur deux soit décalé suivant la direction de travail. Cet arrangement selon deux rangées permet de réduire les risques de bourrage dus à la présence de végétaux ou de chaume. Les disques d'implantation sont également arrangés suivant deux rangées.

Avec un tel semoir, il est important que les disques d'implantation suivent le sillon tracé par le disque ouvreur correspondant. Les disques ouvreurs comme les disques d'implantation sont fixés par bridage sur la poutre correspondante et sont répartis régulièrement sur toute la largeur de travail. Chaque disque d'implantation est aligné avec le disque ouvreur correspondant. Pour un semoir de trois mètres par exemple, il faudra monter vingt disques ouvreurs sur la poutre avant et autant de disques d'implantation sur la poutre arrière. Le montage doit être réalisé avec précision pour que la disposition et la distance, séparant latéralement deux disques ouvreurs ou deux disques d'implantation, soient respectées. Cette opération est donc très coûteuse en temps. Par ailleurs, la justesse du positionnement latéral des disques ouvreurs et des disques d'implantation a une très grande influence sur la qualité du semis.

Par le document US 2010/0096149, on connaît un semoir dans lequel l'ensemble des outils rotatifs est monté par l'intermédiaire d'une unique structure porteuse à balancier de constitution complexe, lesdits outils étant tous associés pour former un chariot relié par un bras porteur au châssis.

Par ailleurs, les documents WO 03/037064, EP 1 234 489 et EP 1 285 564 divulguent des semoirs selon le préambule de la revendication 1. Ils présentent néanmoins tous des inconvénients majeurs.

Ainsi, dans le document WO 03/037064, tous les outils rotatifs sont montés sur une unique console reliée au châssis et doivent être positionnés individuellement sur des traverses.

Dans le document EP 1 234 489, tous les outils rotatifs d'une rangée sont montés sur une même barre support transversale et doivent être positionnés individuellement sur cette dernière.

Dans le document EP 1 285 564, les outils rotatifs sont montés sur le châssis par l'intermédiaire d'une suspension complexe à parallélogramme et chaque outil est monté individuellement sur une traverse support sur laquelle ils doivent tous être positionnés individuellement.

La présente invention a pour but de remédier aux principaux inconvénients précités. Elle doit notamment proposer un semoir pour lequel le positionnement latéral des outils rotatifs sur le châssis est simplifié. La présente invention a également pour but de proposer des outils rotatifs arrangés avec un encombrement compact et fixés au châssis avec une structure de montage simple, mais autorisant un suivi du terrain indépendant pour chaque outil.

A cet effet, l'invention a pour objet un semoir avec les caractéristiques de la revendication 1.

Grâce à ces dispositions, la position d'un des outils rotatifs par rapport à l'autre dans une paire portée par une console est toujours identique. Le temps d'ajustement des outils rotatifs est réduit, le montage est donc plus rapide et plus facile. Avec les outils rotatifs qui s'étendent sensiblement sous la console, on obtient, en outre, une solution compacte. Enfin, avec une liaison spécifique entre chaque outil et la console correspondante, les différents outils sont montés indépendants entre eux.

Des caractéristiques additionnelles et des variantes de réalisation de l'invention sont évoquées dans les revendications dépendantes 2 à 14.

D'autres caractéristiques et avantages de l'invention se dégagent de la description qui suit en regard des dessins annexés qui ne sont donnés qu'à titre d'exemples non limitatifs de modes de réalisation de l'invention. Sur ces dessins :
- la **figure 1** représente une vue latérale d'un semoir, selon la présente invention dans une configuration de travail, attelé à un tracteur,
- la **figure 2** représente une vue de dessus partielle du semoir selon l'invention,
- la **figure 3** représente une vue de détail de la figure 1,
- la **figure 4** représente une vue de détail de la partie avant du semoir en position de transport,
- la **figure 5** représente une vue en perspective d'une console portant des outils rotatifs,
- la **figure 6** représente une vue de dessus d'une console portant des outils rotatifs,
- la **figure 7** représente une vue latérale d'un semoir selon un autre exemple de réalisation.

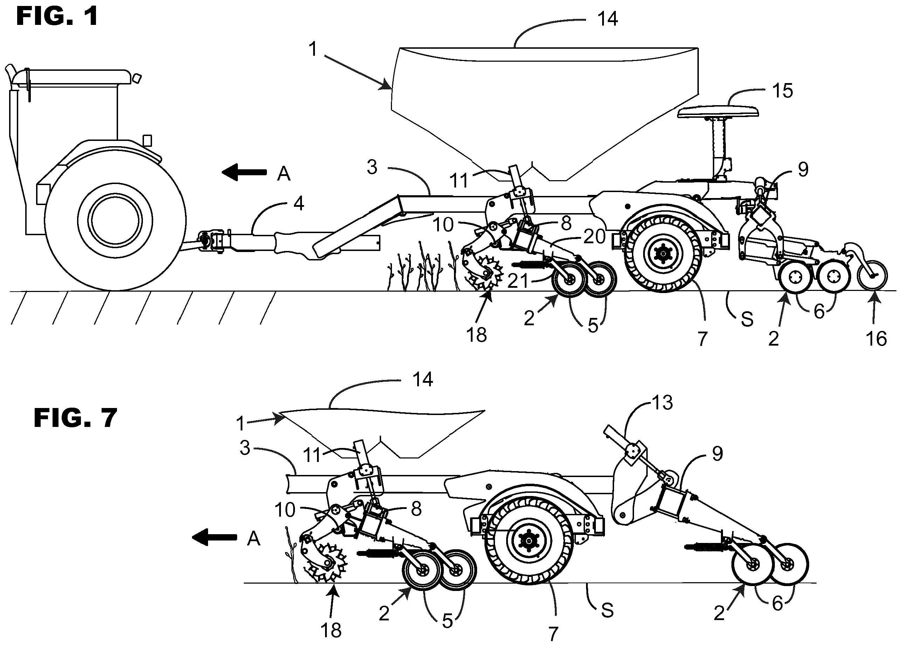

La figure 1 représente, en vue de côté, un semoir (1) conforme à l'invention. Un tel semoir (1) réalise en un seul passage l'ensemble des travaux pour l'implantation d'une culture. Le semoir (1) représenté est un outil de semis direct qui permet la mise en place d'une culture en un seul passage sur un sol non travaillé, c'est-à-dire qu'aucune machine n'a effectué un travail du sol depuis la récolte de la culture précédente. Le semoir (1) est tracté suivant une direction d'avance indiquée par la flèche (A) lors du travail et lors du transport. Dans la suite de la description, les notions suivantes "avant" et "arrière", "devant" et "derrière" sont définies par rapport à la direction d'avance (A).Le semoir (1) comporte un châssis (3) lié à l'arrière d'un tracteur au moyen d'un timon d'attelage (4). Le châssis (3) porte des outils rotatifs (2). Ces outils rotatifs (2) sont répartis régulièrement et arrangés suivant deux rangées sur une poutre respective (8, 9) fixée au châssis (3). Les outils rotatifs (2) possèdent chacun une forme sensiblement circulaire, par exemple des disques ouvreurs (5) et/ou des disques d'implantation (6). Le châssis (3) repose sur le sol (S) au moyen de roues (7). Les roues (7) s'étendent entre les disques ouvreurs (5) et les disques d'implantation (6). Le châssis (3) comporte une poutre avant (8) sur laquelle sont fixés les disques ouvreurs (5) et une poutre arrière (9) sur laquelle sont fixés les disques d'implantation (6). La poutre avant (8) et la poutre arrière (9) sont disposées transversalement par rapport à la direction d'avance (A), elles sont parallèles entre elles en étant mutuellement décalées dans la direction (A). Les outils rotatifs (2) sont susceptibles de passer d'une position de travail à une position de transport ou de demi-tour, et inversement, au moyen d'au moins un actionneur. Lors du transport et des manœuvres, les outils rotatifs (2) sont éloignés du sol (S) et rapprochés du châssis (3) par l'actionneur respectif. A cet effet, la poutre avant (8) est fixée sur le châssis (3) au moyen d'une articulation avant (10) et la poutre arrière (9) est fixée sur le châssis (3) au moyen d'une articulation arrière (12). L'articulation avant (10) s'étend avantageusement devant la poutre avant (8). L'actionneur avant (11) est articulé d'une part sur le châssis (3) et d'autre part sur la poutre avant (8). L'actionneur arrière (13) est articulé d'une part sur le châssis (3) et d'autre part sur la poutre arrière (9). L'articulation avant (10) et l'articulation arrière (12) présentent chacune un axe sensiblement horizontal et perpendiculaire à la direction d'avance (A). Les actionneurs avant et arrière (11, 13) peuvent être commandés séparément.

Le semoir (1) représenté sur la figure 1 permet de préparer et d'ensemencer une bande de terre en un seul passage. Le disque ouvreur (5) précède le disque d'implantation (6). La particularité en semis direct est que le semoir (1) ne travaille que la ligne de semis. Le disque ouvreur (5) réalise un travail localisé sur la ligne de semis avant que les graines soient mises en terre par un disque d'implantation (6). Les disques ouvreurs (5) sont disposés devant les disques d'implantation (6) et suivant une ligne au moins sensiblement horizontale et perpendiculaire à la direction d'avance (A). Chaque disque d'implantation (6) est monté sur la poutre arrière (9) au moyen d'un système à parallélogramme. Ce dernier permet au disque d'implantation (6) de suivre fidèlement le contour du terrain.

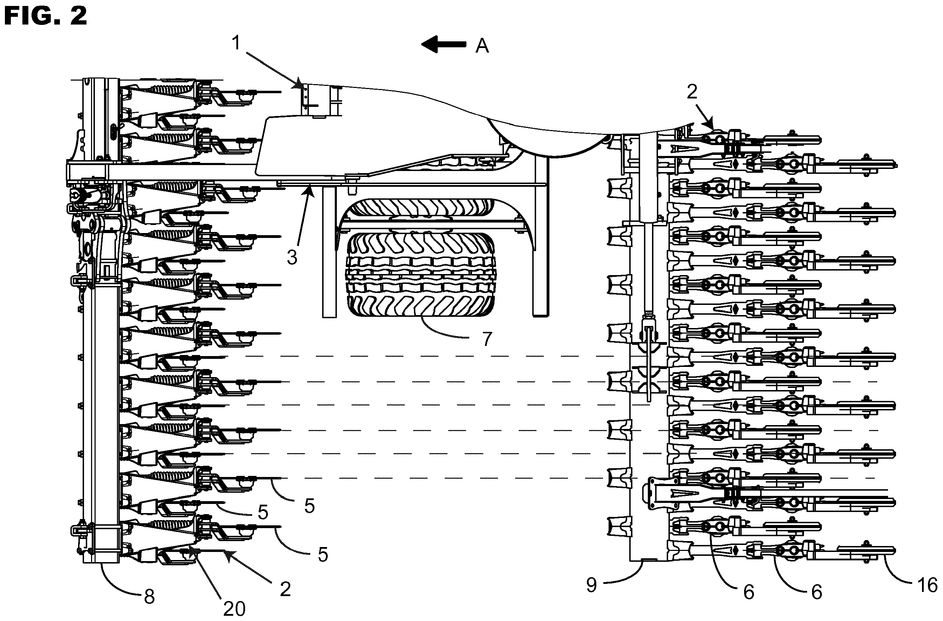

La figure 2 représente une partie du semoir (1) selon une vue de dessus. On constate que le disque d'implantation (6) est disposé dans le prolongement du disque ouvreur (5) correspondant. Cet alignement est représenté par des traits discontinus entre les disques ouvreurs (5) et le disque d'implantation (6). Les outils rotatifs (2) c'est-à-dire les disques ouvreurs (5) ainsi que les disques d'implantation (6) sont répartis de manière au moins sensiblement uniforme sur toute la largeur de travail du semoir (1). La distance séparant latéralement deux disques ouvreurs (5) correspond à l'écartement entre les lignes de semis. Le disque ouvreur (5) est réalisé par un seul disque qui ouvre et émiette, sous l'effet de la vitesse, un sillon avant le passage du disque d'implantation (6). Dans la réalisation, il s'agit d'un disque droit. Dans une alternative, le disque ouvreur (5) est ondulé ou gaufré. Un disque gaufré travaille la ligne de semis sur une bande étroite et un disque ondulé génère un sillon plus large et un foisonnement plus important sur la ligne de semis. La circonférence du disque pénètre plus ou moins profondément dans le sol (S) et assure ainsi la préparation d'une ligne de semis. Le disque ouvreur (5) va aussi couper des résidus végétaux qui se trouvent sur la ligne de semis. Le disque d'implantation (6) est disposé dans le prolongement du disque ouvreur (5) correspondant, ceci est représenté par les traits discontinus sur la figure 2. Le disque d'implantation (6) est réalisé sous la forme d'au moins un disque semeur. Chaque disque semeur se déplace toujours au moins dans le sillon étroit créé par le disque ouvreur (5) correspondant. La culture est ainsi mise en place en un seul passage. Dans l'exemple de réalisation, chaque disque d'implantation (6) est constitué de deux disques disposés en V qui ouvrent le sillon dans lequel est déposée la graine.

Selon la figure 1, le châssis (3) porte également une trémie (14) qui s'étend sensiblement à la verticale des disques ouvreurs (5). La trémie (14) permet le stockage des graines qui sont dosées puis acheminées vers les disques d'implantation (6). La distribution des graines se fait de manière pneumatique depuis la trémie (14) via un doseur et une tête de répartition (15) vers les disques d'implantation (6). Le doseur se situe dans la partie inférieure de la trémie (14). Les disques d'implantation (6) sont raccordés par des tuyaux (non représentés) à la tête de répartition (15). La position de la trémie (14) à l'avant du châssis (3) est favorable pour d'une part la répartition des charges et d'autre part mettre du poids sur les disques ouvreurs (5). Les disques d'implantation (6) fabriquent un sillon à une profondeur déterminée pour y placer la graine et la recouvrir. Chaque disque d'implantation (6) est lié à la poutre arrière (9) au moyen d'un système à parallélogramme permettant un suivi du contour du sol. Le disque d'implantation (6) est suivi d'une roue de contrôle (16) pour le contrôle de la profondeur. Le semoir (1) peut également être équipé d'une herse de recouvrement (non représentée) qui s'étend derrière les disques d'implantation (6). Selon la figure 1, les disques ouvreurs (5) sont précédés d'un rouleau (18) équipés de couteaux. Le rouleau (18) est fixé sur le châssis (3) du semoir (1) et tourne autour d'un axe longitudinal sensiblement perpendiculaire à la direction d'avance (A). Ce rouleau (18) est entraîné en rotation lors du travail par le déplacement du semoir (1) et permet de coucher le couvert végétal sur le sol. Les couteaux répartis sur la circonférence du rouleau (18) permettent de lacérer les végétaux ou les tiges de cultures constituant le couvert végétal. Le semoir (1) équipé du rouleau (18) est capable d'implanter une nouvelle culture dans un couvert végétal.

Selon l'invention, une console (20) porte deux outils rotatifs (2) liés chacun à la console (20) au moyen d'un bras respectif (21), les outils rotatifs (2) s'étendent sensiblement sous la console (20). Dans l'exemple de réalisation représenté, une console (20) porte deux outils rotatifs (2), la position de l'un par rapport à l'autre outil rotatif (2) est toujours identique. Le montage est donc plus rapide et plus facile puisque le temps d'ajustement d'un outil rotatif (2) sur deux n'est plus nécessaire. Avec les outils rotatifs (2) s'étendant sensiblement sous la console (20), on obtient une solution compacte avec un encombrement en hauteur limité. Chaque outil rotatif (2) est monté sur la console (20) au moyen d'un bras (21) respectif. Chaque bras (21) est fixé sur la console (20) au moyen d'une articulation respective (22, 23) d'axe sensiblement horizontal et perpendiculaire à la direction d'avance (A) au travail. Les bras (21) portant les outils rotatifs (2) sont identiques ou différents. L'utilisation de bras (21) de géométrie différente sur une même console (20) permet de modifier l'écartement entre les outils rotatifs (2). On remarque que l'extrémité frontale de la console (20) est fixée sur la poutre avant (8) par bridage (8'). La console (20) est ainsi aisément amovible et sa position suivant l'axe longitudinal de la poutre avant (8) peut être facilement modifiée. Un tel agencement permet aussi d'ajouter ou de retirer facilement une console (20).

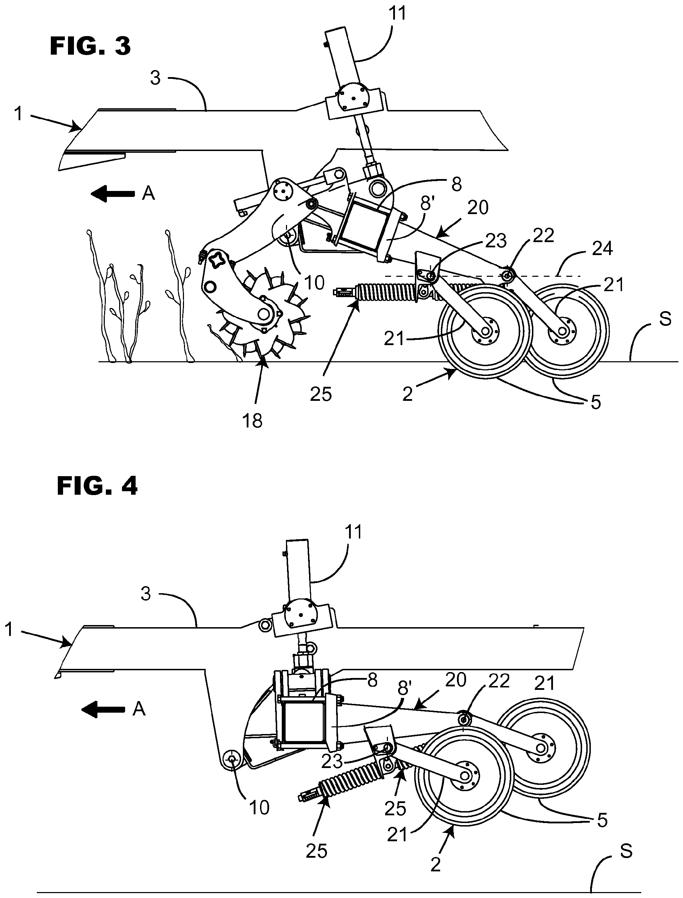

La figure 3 représente la partie avant du semoir (1), au niveau des disques ouvreurs (5). La figure 3 représente le semoir (1) dans la position de travail. La console (20) comporte une première articulation (22) et une deuxième articulation (23), chacune ayant un axe sensiblement horizontal et perpendiculaire à la direction d'avance (A). La première articulation (22) s'étend au niveau de l'extrémité arrière de la console (20) et la deuxième articulation (23) est située entre l'extrémité frontale et l'extrémité arrière de la console (20). Chaque articulation (22, 23) est destinée à recevoir un outil rotatif (2) et dans l'exemple de réalisation un disque ouvreur (5). De préférence, les deux articulations (22, 23) s'étendent dans un même plan sensiblement horizontal (24), sensiblement parallèle au sol durant le travail. Les articulations (22, 23) sont disposées à la même hauteur par rapport au sol. Dans la réalisation représentée, et de manière particulièrement avantageuse, les articulations (22, 23) sont disposées à la même hauteur par rapport au châssis (3).On remarque que les outils rotatifs (2) s'étendent en-dessous du plan sensiblement horizontal (24). L'articulation (22, 23) est une liaison pivot autorisant un pivotement suivant son axe sensiblement horizontal. Un dispositif élastique (25) au niveau de chaque articulation (22, 23) tend à faire pénétrer le disque ouvreur (5) dans le sol (S). Ce dispositif élastique (25) permet également au disque ouvreur (5) de s'esquiver vers le haut lorsqu'il rencontre un obstacle. Dans la réalisation représentée, le dispositif élastique (25) s'étend à l'avant de l'articulation (22, 23) correspondante. Le dispositif élastique (25) s'étend aussi avantageusement en-dessous de la console (20) et notamment du plan horizontal (24). Le dispositif élastique (25) est réalisé par un ressort de compression. Le ressort est dirigé sensiblement horizontalement et parallèlement au sol (S). Le ressort est contraint plus ou moins par un écrou pour s'adapter aux conditions de travail. Dans une alternative, le dispositif élastique (25) est formé par des amortisseurs en caoutchouc ou par un ressort de traction.

La figure 4 représente une partie du semoir (1) dans sa position de transport. Dans cette position de transport, la poutre avant (8) pivote autour de la première articulation (10) au moyen de l'actionneur avant (11). L'actionneur avant (11) se rétracte pour positionner les disques ouvreurs (5) dans leur position de transport. On remarque également que l'encombrement en hauteur de la console (20) avec ses deux disques ouvreurs (5) est minimum. La face supérieure de la console (20) est sensiblement parallèle au châssis (3) lors du transport. Le semoir (1) dispose donc d'une garde au sol (S) suffisante pour circuler sur les routes et chemins. La poutre avant (8) est réalisée par un tube de section carrée, un côté du carré est avantageusement parallèle au châssis (3) dans la position de transport.

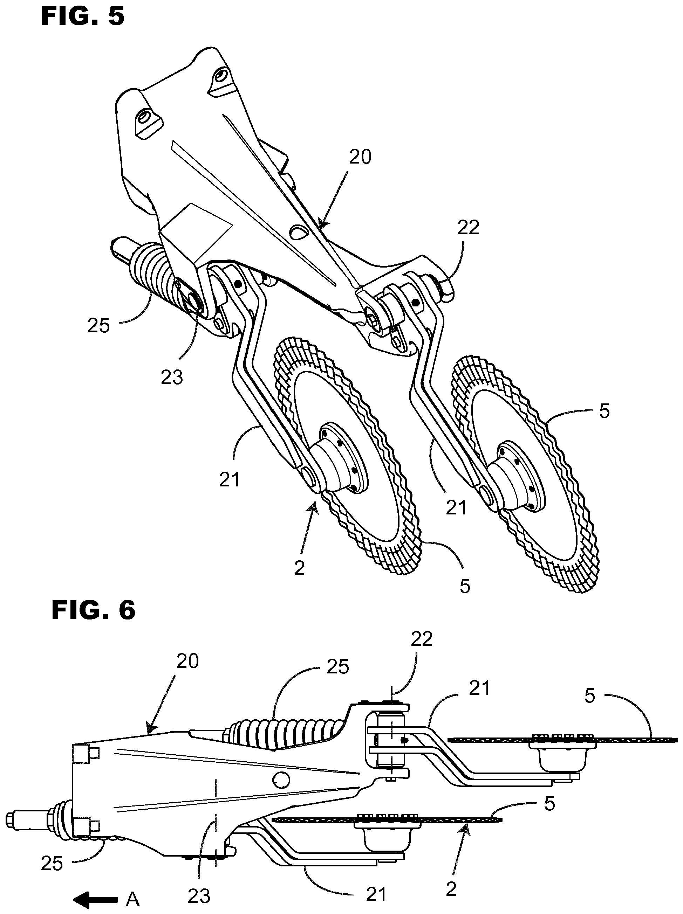

Les figures 5 et 6 sont des vues de détail de la console (20) portant deux outils rotatifs (2) tels que des disques ouvreurs (5). La figure 5 est une vue en perspective et la figure 6 est une vue de dessus de la console (20). Le dispositif de bridage n'est pas représenté sur ces figures. La forme de la console (20) représentée n'est donnée qu'à titre indicatif. D'après la réalisation représentée sur les figures, la console (20) porte deux outils rotatifs (2) de même type. Chaque outil rotatif (2) est un seul disque gaufré qui ouvre et émiette, sous l'effet de la vitesse, un sillon avant le passage du disque d'implantation (6). Le disque gaufré travaille la ligne de semis sur une bande étroite alors qu'un disque ondulé génère un sillon plus large et un foisonnement plus important sur la ligne de semis. Dans une alternative, le disque ouvreur est un disque du type droit qui découpe le sol selon une ligne.

Selon la figure 6, la deuxième articulation (23) s'étend en avant par rapport à la première articulation (22) pour que les outils rotatifs (2) soient disposés selon deux rangées décalées dans la direction d'avance (A). Le décalage latéral entre la première et la deuxième articulations (22, 23) correspond au pas séparant deux lignes de semis adjacentes. Le montage des outils rotatifs (2) au moyen de console (20) selon l'invention est donc bien plus rapide puisque le placement du deuxième outil rotatif se fait sans difficulté par rapport au premier outil rotatif. En effet, le montage du deuxième outil rotatif ne nécessite pas d'ajustement latéral puisque la position de la deuxième articulation (23) est fixe par rapport à la première articulation (22). La distance séparant latéralement les deux outils rotatifs (2) montés sur la console (20) est toujours respectée.

Dans une alternative non représentée, la console (20) porte deux outils rotatifs (2) de type différents. Ainsi, la console (20) peut porter un disque ouvreur (5) et un disque d'implantation (6). Les disques ouvreurs (5) sont fixés sur la deuxième articulation (23) et forment la rangée avant et les disques d'implantation (6) sont fixés sur la première articulation (22) et forment la rangée arrière.

La figure 7 représente un autre exemple de réalisation d'un semoir (1) dans une position de travail. Ce semoir (1) est identique à celui décrit précédemment. La seule différence réside dans les disques d'implantation (6) qui sont fixés sur une console (20) selon l'invention. Les disques d'implantation (6) sont liés par deux sur une console (20). Chaque disque d'implantation (6) est fixé sur la console (20) au moyen d'un bras (21) respectif. Dans cet exemple de réalisation, les disques ouvreurs (5) et les disques d'implantation (6) sont montés par deux sur une console (20) respective. De cette manière, le temps de montage par bridage d'un outil rotatif (2) sur deux est supprimé et le temps d'ajustement pour respecter l'écartement entre les outils rotatifs (2) est réduit, ce temps est divisé par deux.

Par ailleurs, en arrangeant un premier type d'outils (disques ouvreurs 5) sur une première poutre avant 8 et un second type d'outils (disques d'implantation 6) sur une seconde poutre arrière 9, d'une part, et en prévoyant des moyens de relevage/pivotement indépendants (actionneurs avant 11 et arrière 13) et propres à chaque poutre 8 et 9, d'autre part, il est possible de relever séparément et indépendamment chacun des deux ensembles d'outils 5 et 6. Ainsi, le semoir 1 peut fonctionner selon trois modes distincts : uniquement avec les outils 5, uniquement avec les outils 6 ou simultanément avec les deux types d'outils 5 et 6 (fonctionnement normal a priori).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques. L'invention est définie par l'étendu des revendications.

## Revendications

1. Semoir (1) comportant un châssis (3) et des outils rotatifs (2) répartis régulièrement et arrangés sur une poutre (8, 9) fixée au châssis (3), les outils rotatifs (2) étant fixés à leur poutre (8, 9) par des consoles (20), chaque console (20) portant deux outils rotatifs (2) liés chacun à ladite console (20) au moyen d'un bras propre (21) respectif, déterminant la position des deux outils (2) entre eux et dans la direction longitudinale de la poutre (8, 9) sur laquelle ils sont fixés à travers ladite console (20), et les outils rotatifs (2) s'étendant sensiblement sous leur console (20) associée respective,
semoir (1) **caractérisé en ce que** les outils rotatifs (2) sont arrangés suivant deux rangées sur leur poutre respective (8 et 9) et **en ce que** le décalage latéral entre deux outils (2), montés sur une même console (20), correspond au pas séparant deux lignes de semis adjacents.

2. Semoir selon la revendication 1, **caractérisé en ce que** chaque console (20) est fixée à la poutre (8, 9) correspondante par des moyens (8') de fixation amovible, tels que des moyens de bridage, autorisant un positionnement réglable de ladite console (20) suivant l'axe longitudinal de ladite poutre (8, 9).

3. Semoir selon la revendication 1, **caractérisé en ce que** chaque console (20) comporte une première articulation (22) et une deuxième articulation (23), lesdites articulations (22, 23) étant indépendantes entre elles et chaque articulation (22, 23) étant destinée à recevoir un outil rotatif (2), **en ce que** la première articulation (22) et la deuxième articulation (23) s'étendent dans un même plan sensiblement horizontal (24) en position de travail du semoir (1), et **en ce que** la deuxième articulation (23) est décalée latéralement et vers l'avant par rapport à la première articulation (22), compte tenu de la direction d'avance (A).

4. Semoir selon l'une quelconque des revendications 1 à 3, **caractérisé en ce que** chaque bras (21) est fixé sur la console (20) correspondante au moyen d'une articulation pivotante (22, 23) correspondante, avec un axe de pivotement perpendiculaire à la direction d'avance (A) et positionné sensiblement horizontalement en phase de travail du semoir (1).

5. Semoir selon l'une quelconque des revendications 1 à 4, **caractérisé en ce que** la ou chaque poutre (8, 9) est fixée sur le châssis (3) par l'intermédiaire d'une articulation (10, 12) autorisant un pivotement de ladite poutre (8, 9) autour d'un axe perpendiculaire à la direction d'avance (A) et sensiblement horizontal, ledit pivotement étant commandé par un actionneur (11, 13) correspondant et permettant un passage de l'ensemble des outils rotatifs (2), portés par les consoles (20) fixées rigidement sur la poutre (8, 9) concernée, d'une position de travail à une position de transport ou de demi-tour, et inversement, chaque actionneur (11, 13) pouvant avantageusement être commandé séparément.

6. Semoir selon l'une quelconque des revendications 1 à 5, **caractérisé en ce que** la face supérieure de la console (20) s'étend sensiblement parallèlement au châssis (3) dans la position de transport.

7. Semoir selon l'une quelconque des revendications 3 et 4, **caractérisé en ce qu'**au moins l'une desdites première et deuxième articulations (22, 23) comporte un dispositif élastique (25) sollicitant un pivotement du bras (21) correspondant dans une direction favorisant un déplacement de l'outil (2) concerné vers ou dans le sol (S).

8. Semoir selon la revendication 7, **caractérisé en ce que** le ou chaque dispositif élastique (25) s'étend devant l'outil rotatif (2) correspondant, et préférentiellement sous la console (20) concernée.

9. Semoir selon la revendication 7 ou 8, **caractérisé en ce que** les bras (21), les outils (2) et le ou les dispositif(s) élastique(s) (25) associés à une console (20) sont disposés sensiblement dans l'encombrement latéral maximal de cette console (20), vus dans la direction d'avance (A), et sous le plan horizontal (24) contenant les première et deuxième articulations (22, 23) en position de travail du semoir (1).

10. Semoir selon l'une quelconque des revendications 1 à 9, **caractérisé en ce qu'**il comprend une poutre avant ou première poutre (8) et une poutre arrière ou seconde poutre (9), disposées transversalement à la direction d'avance (A), avec un décalage, et parallèles entre elles, les outils rotatifs (2) arrangés sur l'une (8) au moins des deux poutres (8, 9), préférentiellement les deux, étant fixés sur celle(s)-ci par l'intermédiaire de consoles (20), chaque console (20) portant deux outils rotatifs (2) de même type ou de types différents.

11. Semoir selon l'une quelconque des revendications 1 à 3, **caractérisé en ce qu'**il consiste en un semoir direct et **en ce que** les outils rotatifs (2), fixés sur une première poutre avant (8), sont des disques ouvreurs (5) et **en ce que** les outils rotatifs (2), fixés sur une seconde poutre arrière (9), sont des disques d'implantation (6), chaque disque d'implantation (6) étant disposé dans l'alignement suivant la direction d'avance (A) d'un disque ouvreur (5) ou dans la trace laissée par un des disques ouvreurs (5) en phase de travail du semoir (1).

12. Semoir selon l'une quelconque des revendications 1 à 11, **caractérisé en ce que** chaque console (20) avec ses bras (21), ses outils (2) et, le cas échéant, ses dispositifs élastique (25), constitue un module préassemblé, destiné à être monté sur une poutre (8, 9) avec ajustement de sa position dans la direction de l'axe longitudinal de la poutre (8, 9) concernée, avant fixation.

13. Semoir selon l'une quelconque des revendications 1 à 12, **caractérisé en ce qu'**il comprend également une trémie (14) ou un réservoir de stockage de semis analogue dont le poids exerce une pression sur les outils rotatifs (2) de la première poutre avant (8).

14. Semoir selon l'une quelconque des revendications 1 à 13, **caractérisé en ce qu'**il comprend également un rouleau rotatif (18) équipé de couteaux, situé devant les outils rotatif (2) de la première poutre (8) dans le sens d'avance (A).

## Patentansprüche

1. Sämaschine (1) mit einem Rahmen (3) und drehbaren Werkzeugen (2), die gleichmäßig verteilt und an einem am Rahmen (3) befestigten Balken (8, 9) angeordnet sind, wobei die drehbaren Werkzeuge (2) durch Träger (20) an ihrem Balken (8, 9) befestigt sind, wobei jeder Träger (20) zwei drehbare Werkzeuge (2) trägt, die mit dem Träger (20) jeweils mit Hilfe eines entsprechenden Arms (21) verbunden sind, der die Position der beiden Werkzeuge (2) zueinander und die Längsrichtung des Balkens (8, 9), an dem sie über den Träger (20) befestigt sind, bestimmt, und wobei sich die drehbaren Werkzeuge (2) im Wesentlichen unter ihrem jeweiligen zugeordneten Träger (20) erstrecken,
wobei die Sämaschine (1) **dadurch gekennzeichnet ist, dass** die drehbaren Werkzeuge (2) in zwei Reihen an ihrem jeweiligen Balken (8 und 9) angeordnet sind und dass der seitliche Versatz zwischen zwei einem gleichen Träger (20) montierten Werkzeugen (2) dem Abstand entspricht, der zwei benachbarte Säreihen trennt.

2. Sämaschine nach Anspruch 1, **dadurch gekennzeichnet, dass** jeder Träger (20) am entsprechenden Balken (8, 9) durch abnehmbare Befestigungsmittel (8'), beispielsweise Klemmmittel, befestigt ist, die eine einstellbare Positionierung des Trägers (20) entlang der Längsachse des Balkens (8, 9) ermöglichen.

3. Sämaschine nach Anspruch 1, **dadurch gekennzeichnet, dass** jeder Träger (20) ein erstes Gelenk (22) und ein zweites Gelenk (23) aufweist, wobei die Gelenke (22, 23) voneinander unabhängig sind und jedes Gelenk (22, 23) dazu bestimmt ist, ein drehbares Werkzeug (2) aufzunehmen, dass sich in der Arbeitsposition der Sämaschine (1) das erste Gelenk (22) und das zweite Gelenk (23) in einer gleichen im Wesentlichen horizontalen Ebene (24) erstrecken und dass das zweite Gelenk (23) relativ zum ersten Gelenk (22) und im Hinblick auf die Vorschubrichtung (A) zur Seite und nach vorn versetzt ist.

4. Sämaschine nach einem der Ansprüche 1 bis 3, **dadurch gekennzeichnet, dass** jeder Arm (21) mit Hilfe eines entsprechenden Drehgelenks (22, 23) mit einer zur Vorschubrichtung (A) senkrechten und in der Arbeitsphase der Sämaschine (1) im Wesentlichen horizontal positionierten Drehachse am entsprechenden Träger (20) befestigt ist.

5. Sämaschine nach einem der Ansprüche 1 bis 4, **dadurch gekennzeichnet, dass** der oder jeder Balken (8, 9) am Rahmen (3) mit Hilfe eines Gelenks (10, 12) befestigt ist, das eine Drehung des Balkens (8, 9) um eine zur Vorschubrichtung (A) senkrechte und im Wesentlichen horizontale Achse ermöglicht, wobei die Drehung durch einen entsprechenden Aktuator (11, 13) gesteuert wird, der einen Übergang aller drehbaren Werkzeuge (2), die von den starr am betreffenden Balken (8, 9) befestigten Trägern (20) getragen werden, von einer Arbeitsposition in eine Transport- oder Wendeposition und umgekehrt ermöglichen, wobei jeder Aktuator (11, 13) vorteilhafter Weise separat steuerbar ist.

6. Sämaschine nach einem der Ansprüche 1 bis 5, **dadurch gekennzeichnet, dass** sich in der Transportposition die obere Seite des Trägers (20) im Wesentlichen parallel zum Rahmen (3) erstreckt.

7. Sämaschine nach einem der Ansprüche 3 und 4, **dadurch gekennzeichnet, dass** zumindest eines des ersten und des zweiten Gelenks (22, 23) eine elastische Vorrichtung (25) aufweist, die eine Drehung des entsprechenden Arms (21) in eine Richtung bewirkt, die eine Verschiebung des betreffenden Werkzeugs (2) zum oder in den Boden (S) begünstigt.

8. Sämaschine nach Anspruch 7, **dadurch gekennzeichnet, dass** sich die oder jede elastische Vorrichtung (25) vor dem entsprechenden drehbaren Werkzeug (2) und vorzugsweise unter dem betreffenden Träger (20) erstreckt.

9. Sämaschine nach Anspruch 7 oder 8, **dadurch gekennzeichnet, dass** die Arme (21), die Werkzeuge (2) und die einem Träger (20) zugeordnete(n) elastische(n) Vorrichtung(en) (25) im Wesentlichen in der maximalen seitlichen Abmessung dieses Trägers (20), in der Vorschubrichtung (A) gesehen, und unter der horizontalen Ebene (24), die in der Arbeitsposition der Sämaschine (1) das erste und das zweite Gelenk (22, 23) beinhaltet, angeordnet sind.

10. Sämaschine nach einem der Ansprüche 1 bis 9, **dadurch gekennzeichnet, dass** sie einen vorderen Balken oder ersten Balken (8) und einen hinteren Balken oder zweiten Balken (9) umfasst, die quer zur Vorschubrichtung (A) versetzt und parallel zueinander angeordnet sind, wobei die drehbaren Werkzeuge (2), die an zumindest einem (8) der beiden Balken (8, 9), vorzugsweise an beiden angeordnet sind, an diesen mit Hilfe von Trägern (20) befestigt sind, wobei jeder Träger (20) zwei drehbare Werkzeuge (2) gleichen oder unterschiedlichen Typs trägt.

11. Sämaschine nach einem der Ansprüche 1 bis 3, **dadurch gekennzeichnet, dass** sie eine Direktsämaschine ist und dass die an einem ersten vorderen Balken (8) befestigten drehbaren Werkzeuge (2) Öffnungsscheiben (5) sind und dass die an einem zweiten hinteren Balken (9) befestigten drehbaren Werkzeuge (2) Pflanzscheiben (6) sind, wobei jede Pflanzscheibe (6) fluchtend in der Vorschubrichtung (A) einer Öffnungsscheibe (5) oder in der von einer der Öffnungsscheiben (5) in der Arbeitsphase der Sämaschine (1) hinterlassenen Spur angeordnet ist.

12. Sämaschine nach einem der Ansprüche 1 bis 11, **dadurch gekennzeichnet, dass** jeder Träger (20) mit seinen Armen (21), seinen Werkzeugen (2) und gegebenenfalls seinen elastischen Vorrichtungen (25) ein vormontiertes Modul bildet, das dazu bestimmt ist, an einem Balken (8, 9) mit Einstellung seiner Position in Richtung der Längsachse des betreffenden Balkens (8, 9) montiert zu werden, bevor es befestigt wird.

13. Sämaschine nach einem der Ansprüche 1 bis 12, **dadurch gekennzeichnet, dass** sie außerdem einen Trichter (14) oder einen ähnlichen Behälter zum Speichern von Saatgut umfasst, dessen Gewicht einen Druck auf die drehbaren Werkzeuge (2) des ersten vorderen Balkens (8) ausübt.

14. Sämaschine nach einem der Ansprüche 1 bis 13, **dadurch gekennzeichnet, dass** sie außerdem eine mit Messern ausgestattete drehbare Walze (18) umfasst, die sich in der Vorschubrichtung (A) vor den drehbaren Werkzeugen (2) des ersten Balkens (8) befindet.

## Claims

1. Seed drill (1) comprising a chassis (3) and rotary tools (2) distributed regularly and arranged on a beam (8, 9) fixed to the chassis (3), the rotary tools (2) being fixed to their beam (8, 9) by consoles (20), each console (20) carrying two rotary tools (2) each connected to said console (20) by means of its respective own arm (21), determining the position of the two tools (2) between them and in the longitudinal direction of the beam (8, 9) to which they are fixed by way of said console (20), and the rotary tools (2) extending substantially under their respective associated console(20),
seed drill (1) **characterised in that** the rotary tools (2) are arranged in two rows on their respective beams (8 and 9) and **in that** the lateral offset between two tools (2) mounted on the same bracket (20) corresponds to the pitch separating two rows of adjacent seeds.

2. Seed drill according to claim 1, **characterised in that** each console (20) is fixed to the corresponding beam (8, 9) by removable fixing means (8') such as clamping means, allowing adjustable positioning of said console (20) along the longitudinal axis of said beam (8, 9).

3. Seed drill according to claim 1, **characterised in that** each console (20) comprises a first joint (22) and a second joint (23), said joints (22, 23) being independent of each other and each joint (22, 23) being designed to receive a rotary tool (2), **in that** the first joint (22) and the second joint (23) extend in the same substantially horizontal plane (24) in the working position of the seed drill (1), and **in that** the second joint (23) is offset laterally and towards the front in relation to the first joint (22), taking into account the direction of advance (A).

4. Seed drill according to any one of claims 1 to 3, **characterised in that** each arm (21) is fixed to the corresponding console (20) by means of a corresponding pivot joint (22, 23), with a pivot axis perpendicular to the direction of advance (A) and positioned substantially horizontally in the working phase of the seed drill (1).

5. Seed drill according to any one of claims 1 to 4, **characterised in that** the or each beam (8, 9) is fixed to the chassis (3) by means of a joint (10, 12) allowing pivoting of said beam (8, 9) about an axis perpendicular to the direction of advance (A) and substantially horizontal, said pivoting being controlled by a corresponding actuator (11, 13) allowing all of the rotary tools (2), carried by the consoles (20) fixed rigidly to the beam (8, 9) concerned, to pivot from a working position to a transport or about-face position, and vice versa, each actuator (11, 13) being capable advantageously of being controlled separately.

6. Seed drill according to any one of claims 1 to 5, **characterised in that** the upper face of the console (20) extends substantially parallel to the chassis (3) in the transport position.

7. Seed drill according to any one of claims 3 and 4, **characterised in that** at least one of said first and second joints (22, 23) comprises an elastic device (25) which seeks to pivot the corresponding arm (21) in a direction favouring displacement of the tool (2) concerned towards or into the ground (S).

8. Seed drill according to claim 7, **characterised in that** the or each elastic device (25) extends in front of the corresponding rotary tool (2), and preferably under the console (20) concerned.

9. Seed drill according to claim 7 or 8, **characterised in that** the arms (21), the tools (2) and the elastic device or devices (25) associated with a console (20) are disposed substantially within the maximum lateral dimension of this console (20), seen in the direction of advance (A), and under the horizontal plane (24) containing the first and second joints (22, 23) in the working position of the seed drill (1).

10. Seed drill according to any one of claims 1 to 9, **characterised in that** it includes a front beam or first beam (8) and a rear beam or second beam (9), disposed transversely to the direction of advance (A), with an offset, and parallel to each other, the rotary tools (2) arranged on at least one (8) of the two beams (8, 9), preferably both, being fixed to them by means of consoles (20), each console (20) carrying two rotary tools (2) of the same type or different types.

11. Seed drill according to any one of claims 1 to 3, **characterised in that** it consists of a direct seed drill and **in that** the rotary tools (2) fixed to a first front beam (8) are furrow-forming discs (5) and **in that** the rotary tools (2) fixed to a second rear beam (9) are sowing discs (6), each sowing disc (6) being disposed in alignment, in the direction of advance (A), with a furrow-forming disc (5) or in the track left by one of the furrow-forming discs (5) in the working phase of the seed drill (1).

12. Seed drill according to any one of claims 1 to 11, **characterised in that** each console (20) with its arms (21), its tools (2) and, if occasion arises, its elastic devices (25) constitutes a preassembled module designed to be mounted on a beam (8, 9) with adjustment of its position in the direction of the longitudinal axis of the beam (8, 9) concerned, before fixing.

13. Seed drill according to any one of claims 1 to 12, **characterised in that** it also includes a hopper (14) or a like seed storage reservoir of which the weight exercises pressure on the rotary tools (2) of the first front beam (8).

14. Seed drill according to any one of claims 1 to 13, **characterised in that** it also includes a rotary roller (18) equipped with blades, situated in front of the rotary tools (2) of the first beam (8) in the direction of advance (A).
